(19)

Europäisches
Patentamt
European
Patent Office
Office européen
des brevets

(11) **EP 1 538 759 B1**

(12) **EUROPEAN PATENT SPECIFICATION**

(45) Date of publication and mention
of the grant of the patent:
**14.02.2007 Bulletin 2007/07**

(51) Int Cl.:
**H04B 1/10** *(2006.01)*   **H04B 1/16** *(2006.01)*

(21) Application number: **04028608.0**

(22) Date of filing: **02.12.2004**

(54) **Adaptive FM receiver with multipath filter**

Adaptiver FM Empfänger mit einem Mehrwegfilter

Récepteur FM adaptatif avec filtre anti-multichemin

(84) Designated Contracting States:
**DE FR GB**

(30) Priority: **03.12.2003   JP 2003405023**

(43) Date of publication of application:
**08.06.2005   Bulletin 2005/23**

(73) Proprietor: **Pioneer Corporation
Meguro-ku,
Tokyo (JP)**

(72) Inventors:
 • **Yamamoto, Yuji
Kawagoe Koujou, Pioneer Corp.
Kawagoe-shi
Saitama-ken 350-8555 (JP)**

 • **Kubuki, Toshiaki
Kawagoe Koujou, Pioneer Corp.
Kawagoe-shi
Saitama-ken 350-8555 (JP)**

(74) Representative: **Sajda, Wolf E. et al
MEISSNER, BOLTE & PARTNER
Postfach 86 06 24
81633 München (DE)**

(56) References cited:
**EP-A- 1 071 220**

 • **PATENT ABSTRACTS OF JAPAN vol. 016, no. 064
(E-1167), 18 February 1992 (1992-02-18) & JP 03
259624 A (PIONEER ELECTRON CORP), 19
November 1991 (1991-11-19)**

**Description**

Background of the Invention

The present invention relates to a receiver which receives, for example, an FM-modulated signal or a phase-modulated signal, and particularly to a receiver which is equipped with a multipass removal filter for removing a multipass distortion.

A conventional receiver has been disclosed in Japanese Utility Model Publication No. Sho 59-31077, which is capable of receiving an FM broadcast and eliminating an influence from a multipass by improving an S/N.

European Patent Application EP 1071220 also discloses a FM receiver, which controls adaptively the degree of stereo separation and of high frequency removal depending on the input signal level and the multipath detected.

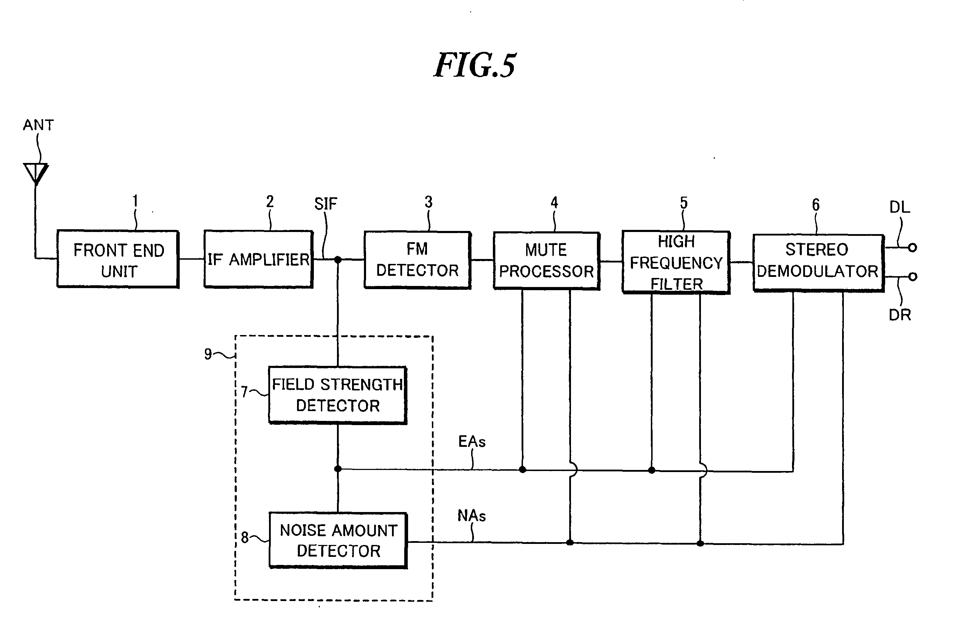

Upon describing the structure of this receiver with reference to Fig. 5, it is understood that a process from the receiving of incoming electric wave to the demodulation of the same into the left-right channel signals (left-right stereo signals) DL, DR can be executed through an analog signal processing.

As shown, a front end unit 1 converts a received high frequency signal outputted from a reception antenna ANT into an intermediate frequency signal which is then amplified by an IF amplifier 2, thereby outputting an intermediate frequency signal SIF having a level capable of signal processing. Then, an FM detector 3 operates to generate a composite signal by FM detecting the intermediate frequency signal SIF. The generated composite signal is then applied toward a mute processor 4, a high frequency removal filter 5, and a stereo demodulator 6, thereby outputting left-right channel signals DL, DR through the stereo demodulator 6.

Further, the receiver is equipped with a field strength detector 7 for detecting a field strength by AM detecting the intermediate frequency signal SIF. Then, in response to a change in a field strength detection signal EAs outputted from the field strength detector 7, an attenuation amount of the mute processor 4, a high frequency cutoff characteristic (f characteristic) of the high frequency removal filter 5, and a separation characteristic (separation degree) of the stereo demodulator 6 are controlled to generate left-right channel signals DL, DR having an acceptable S/N, thereby substantially eliminating an influence from the multipass distortion by improving S/N.

Moreover, although not described in the aforementioned Japanese Utility Model Publication, there has also been suggested a method in which the receiver is equipped with a detecting section 9 which includes not only the above-described field strength detector 7, but also a noise amount detector 8 for detecting a noise component contained in the field strength detection signal EAs. Then, based on a noise detection signal NAs outputted from the noise amount detector 8 and the field strength detection signal EAs mentioned above, an attenuation amount of the mute processor 4, a high frequency cutoff characteristic (f characteristic) of the high frequency removal filter 5, and a separation characteristic (separation degree) of the stereo demodulator 6 are controlled to generate left-right channel signals DL, DR having an acceptable S/N, thereby substantially eliminating an influence from the multipassdistortion by improving S/N.

However, the above-described conventional receiver fails to directly eliminate the multipass distortion. In fact, it only captures, as a noise component, a multipass distortion occurred due to an influence from the multipass, and then, controls the respective characteristics of the mute processor 4, the high frequency removal filter 5, and the stereo demodulator 6, so as to substantially eliminate the influence from the multipass distortion by improving S/N.

For this reason, there has been suggested another receiver which attempts to further improve S/N by eliminating the multipass distortion from the intermediate frequency signal SIF, and controlling the respective characteristics of the mute processor 4, the high frequency removal filter 5, and the stereo demodulator 6, arranged successively following the FM detector 3.

This receiver which eliminates the multipass distortion from the intermediate frequency signal SIF is equipped with an A/D converter for converting the intermediate frequency signal SIF outputted from an IF amplifier 2 into an intermediate frequency signal consisting of a digital data sequence, and a digital filter for performing a predetermined digital signal processing on the aforementioned intermediate frequency signal (consisting of a digital data sequence) outputted from the A/D converter. Moreover, the FM detector 3, the mute processor 4, the high frequency removal filter 5, and the stereo demodulator 6 shown in Fig.5 are all constructed by digital circuits or the like.

Namely, the intermediate frequency signal (consisting of a digital data sequence) outputted from the A/D converter will at first be supplied to the digital filter which has the reverse characteristic of the propagation path of an incoming wave, followed by receiving a digital signal processing, thereby removing the multipass distortion. Subsequently, the intermediate frequency signal whose multipass distortion has already been eliminated will be FM detected in the FM detector 3 constructed by digital circuit or the like. Further, the FM detection signal thus detected will be signal-processed in the mute processor 4, the high frequency removal filter 5, and the stereo demodulator 6, which are all constructed by digital circuits or the like, thus realizing an elimination of the multipass distortion and an improvement of S/N.

However, the receiver equipped with the digital filter for eliminating the multipass distortion has been found to have a problem as described below. Namely, there is still no appropriate and sufficient analysis as to signals of which portions of the receiver can be used to detect the field strength detection signal and the noise detection signal which are both needed for controlling the respective characteristics of the mute processor 4, the high frequency removal filter 5, and the stereo demodulator 6, nor is there any appropriate and sufficient analysis as to how to control the mute processor 4, the high frequency removal filter 5, and the stereo demodulator 6.

That is, although the multipass distortion can be eliminated by providing the digital filter, there has not been an adequate optimization for realizing an improved S/N by the mute processor 4, the high frequency removal filter 5, and the stereo demodulator 6.

SUMMARY OF THE INVENTION

The present invention has been accomplished to solve the above-discussed conventional problems, and it is an object of the invention to provide a receiver equipped with a multipass removal filter and optimized for realizing an improved S/N.

According to the present invention, there is provided a receiver comprising: a multipass removal filter for receiving as an input signal a digitalized FM-modulated or phase-modulated signal having an intermediate frequency, and removing a multipass distortion from the input signal; a detector for detecting a desired signal outputted from the multipass removal filter; a demodulator for demodulating a detection signal detected by the detector; a first field strength detector for detecting a first field strength from the input signal; a second field strength detector for detecting a second field strength from the desired signal; a noise amount detector for detecting a noise component contained in the second field strength detection signal; and a controller for performing at least a mute control, a high-cut control and a separation control on the demodulator, in response to a change in the first field strength detected by the first field strength detector and a change in the noise component detected by the noise amount detector.

Specifically, the controller operates to compare the first field strength with a first threshold value and a second threshold value which are predetermined in relation to field strength, to perform the mute control on the demodulator when the first field strength is smaller than the first threshold value, to perform the high-cut control on the demodulator when the first field strength is between the first threshold value and the second threshold value, and to perform the separation control on the demodulator when the first field strength exceeds the second threshold value.

In particular, the controller operates to compare the detected noise component with a third threshold value and a fourth threshold value which are predetermined in relation to noise component amount, to perform the separation control on the demodulator when the detected noise component is smaller than the third threshold value, to perform the high-cut control on the demodulator when the detected noise component is between the third threshold value and the fourth threshold value, and to perform the mute control on the demodulator when the detected noise component exceeds the fourth threshold value.

BRIEF DESCRIPTION OF THE DRAWINGS

These and other objects and advantages of the present invention will become clear from the following description with reference to the accompanying drawings, wherein:

Fig. 1 is a block diagram showing the constitution of a receiver formed according to an embodiment of the present invention;
Fig. 2 is a block diagram indicating the constitution of a multipass removal filter shown in Fig. 1;
Figs. 3A and 3B are explanatory graphs showing the operation of the controller shown in Fig. 1;
Figs. 4A and 4B are block diagrams showing the constitutions of the receivers of examples 1 and 2, for evaluating the receiver shown in Fig. 1 and Fig. 2; and
Fig. 5 is a block diagram showing the constitution of a conventional receiver.

DETAILED DESCRIPTION OF THE PREFERRED EMBODIMENTS

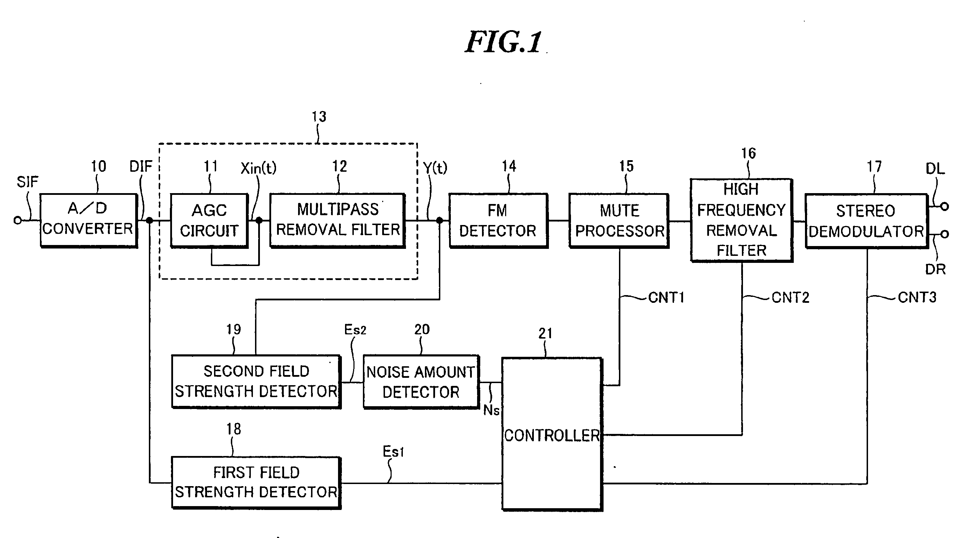

In the following, description will be given to explain, as a preferred embodiment of the present invention, a radio receiver for receiving FM broadcast or the like. Fig.1 is a block diagram showing the constitution of the receiver formed according to the present embodiment.

As shown in Fig. 1, the receiver comprises a front end unit for generating an intermediate frequency signal by carrying out a mixed detection of received high frequency signals obtained through a reception antenna (not shown), and an IF amplifier which amplifies the intermediate frequency signal to a level capable of signal possessing. The receiver further includes an A/D converter 10 which outputs an intermediate frequency signal DIF consisting of a digital data sequence, by carrying out an A/D conversion of an amplified intermediate frequency signal SIF outputted from the IF amplifier.

The A/D converter 10 is connected with a multipass removal section 13 and a first field strength detector 18.

The multipass removal section 13 includes an automatic gain control circuit 11 (hereinafter, referred to as "AGC circuit") which receives an intermediate frequency signal DIF as an input signal, and a multipass removal filter 12 consisting of a digital filter.

The output of the multipass removal filter 12 is connected with an FM detector 14, while the output of the FM detector 14 is connected with a mute processor 15 serving as demodulation means, a high frequency removal filter 16, and a stereo demodulator 17, connected in series as shown in Fig. 1.

Further, the output of the multipass removal filter 12 is also connected with a second field strength detector 19, the output of which is connected with a noise amount detector 20.

Moreover, the receiver is provided with a controller 21 which receives a first field strength detection signal Esl outputted from the first field strength detector 18 and a noise detection signal Ns outputted from the noise amount detector 20, and variably controls the respective characteristics of the mute processor 15, the high frequency removal filter 16, and the stereo demodulator 17, in response to a change in the noise detection signal Ns.

The above-mentioned AGC circuit 11, the multipass removal filter 12, the FM detector 14, the mute processor 15, the high frequency removal filter 16, the stereo demodulator 17, the first field strength detector 18, the second field strength detector 19, the noise amount detector 20 and the controller 21 are all formed by digital circuits or digital signal processors (DSP).

The above-mentioned AGC circuit 11 automatically adjusts a gain so as to adjust an intermediate frequency signal DIF supplied from the A/D converter 10 to an intermediate frequency signal $X_{in}(t)$ having a predetermined constant amplitude and then supplies the signal to the multipass removal filter 12. Namely, in view of the fact that the amplitudes of an FM-modulated signal or a phase-modulated signal are constant from the beginning, the AGC circuit 11 is provided so as to supply an intermediate frequency signal $X_{in}(t)$ adjusted to a constant amplitude to the multipass removal filter 12.

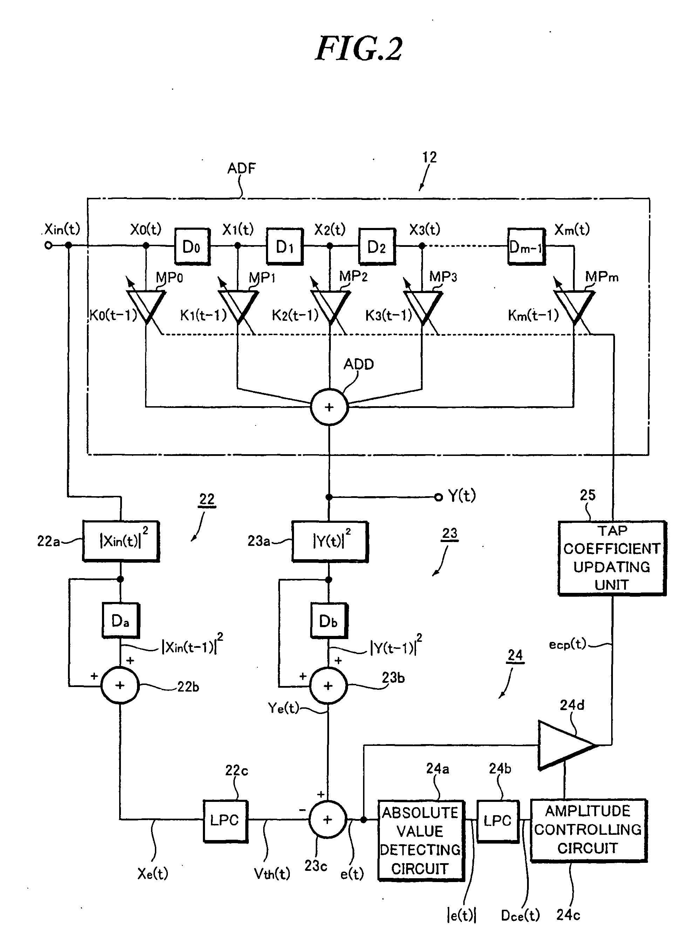

The multipass removal filter 12 is constituted in a manner as shown in Fig. 2 which is a block diagram, including a digital filter ADF, an envelope detecting section 22, an error detecting section 23, an error component restricting section 24, and a tap coefficient updating unit 25.

The digital filter ADF is comprised of an FIR digital filter or an IIR digital filter approximated by carrying out the Taylor development of the reverse characteristics of a propagation path until an electric wave arrives at an above-mentioned reception antenna. Further, with its tap coefficient being variable, the digital filter ADF generates and then outputs a desired signal (in other words, a predicted signal Y(t)) whose multipass distortion has been removed from an intermediate frequency signal $X_{in}(t)$.

Namely, while continuously delaying an intermediate frequency signal $X_{in}(t)$ by using m levels of delay elements $D_0$ - $D_{m-1}$ set as a delay time T equal to an inverse number of the above-mentioned sampling frequency, m multipliers $MP_0$ - $MP_m$ (m: number of taps) are operated to multiply, by the tap coefficients $K_0(t)$ - $K_{m-1}(t)$, the newest intermediate frequency signal $X_0(t)$ and the intermediate frequency signals $X_1(t)$ - $X_m(t)$ outputted from the delay elements $D_0$ - $D_{m-1}$, followed by using an adder ADD to add together m outputs of the multipliers $MP_0$ - $MP_m$, thereby generating and then outputting a desired signal Y(t) not containing multipass distortion.

The envelope detecting section 22 includes a computing unit 22a for computing the square $|X_{in}(t)|^2$ of the absolute value of an intermediate frequency signal $X_{in}(t)$, a delay element $D_a$ for delaying the output of the computing unit 22a by a delay time T and then outputting the output, an adder 22b for adding together the output value $|X_{in}(t)|^2$ of the computing unit 22a and the output value $|X_{in}(t-1)|^2$ of the delay element $D_a$ so as to output an envelope signal $X_e(t)$ indicating the envelope of the intermediate frequency signal $X_{in}(t)$, and a digital low-pass filter 22c which outputs a reference signal $V_{th}(t)$ of a direct current by smoothing the envelope signal $X_e(t)$.

That is, the envelope detecting section 22 generates and outputs the reference signal $V_{th}(t)$ of a direct current, in view. of the fact that the amplitudes of an FM modulation signal and a phase modulation signal are constant from the beginning.

The error detecting section 23 includes a computing unit 23a for computing the square $|Y(t)|^2$ of the absolute value of a desired signal Y(t) outputted from the digital filter ADF, a delay element Db for delaying the output of the computing unit 23a by a delay time T and then outputting the output, an adder 23b for adding together the output value $|Y(t)|^2$ of the computing unit 23a and the output value $|Y(t-1)|^2$ of the delay element Db so as to output an envelope signal Ye(t) indicating the envelope of the desired signal Y(t), and a subtracter 23c for carrying out a subtraction processing to find an error component e (t) representing a difference between the envelope signal Ye(t) and the above-mentioned reference signal $V_{th}(t)$.

The error component restricting section 24 includes an absolute value detecting circuit 24a, a digital low-pass filter 24b, an amplitude controlling circuit 24c, and an amplitude restricting circuit 24d.

The absolute value detecting circuit 24a finds the absolute value $|e(t)|$ of the error component e (t) , while the digital low-pass filter 24b generates and outputs a smoothed error component $D_{ce}(t)$ by smoothing the absolute value $|e(t)|$.

The amplitude controlling circuit 24c supervises the amplitude of an error component $D_{ce}(t)$ in detail. When the amplitude of the error component $D_{ce}(t)$ exceeds a predetermined value, the amplitude controlling circuit 24c controls the amplitude restricting circuit 24d so as to output a signal in which the amplitude of an error component e (t) has been inhibited, i.e., a corrected error component $e_{cp}(t)$. On the other hand, when the amplitude of the error component $D_{ce}$ (t) has not reached a predetermined value, the amplitude controlling circuit 24c controls the amplitude restricting circuit 24d so as to output an error component as a corrected error component $e_{cp}(t)$ without inhibiting the amplitude of the error component e (t) .

Here, the amplitude restricting circuit 24d is formed by a digital attenuator or an amplifier, and changes an attenuation factor or an amplification factor in accordance with the control performed by the above-mentioned amplitude controlling circuit 24c, thereby outputting a corrected error component $e_{cp}$ (t) in which the amplitude of an error component e(t) has been inhibited.

If the amplitude restricting circuit 24d is formed by a digital attenuator and when the amplitude of an error component $D_{ce}$ (t) has not reached a predetermined value, the amplitude restricting circuit 24d will be controlled by the amplitude controlling circuit 24c so as to set its attenuation factor at 0 dB, thereby outputting an error component e (t) as a corrected error component $e_{cp}$ (t) without performing any correction. On the other hand, when the amplitude of the error component $D_{ce}(t)$ has exceeded the predetermined value, the amplitude restricting circuit 24d will be controlled by the amplitude controlling circuit 24c so as to increase its attenuation factor, thereby outputting a corrected error component $e_{cp}(t)$ with the amplitude of an error component e(t) inhibited.

If the amplitude restricting circuit 24d is formed by an amplifier and when the amplitude of an error component $D_{ce}(t)$ has not reached a predetermined value, the amplitude restricting circuit 24d will be controlled by the amplitude controlling circuit 24c so as tomaintain its amplification factor at a predetermined standard amplification factor, thereby outputting an error component e(t) as a corrected error component $e_{cp}(t)$ without performing any correction. On the other hand, when the amplitude of the error component $D_{ce}$ (t) has exceeded the predetermined value, the amplitude restricting circuit 24d will be controlled by the amplitude controlling circuit 24c so as to reduce its amplification factor to a value lower than the standard amplification factor, thereby outputting a corrected error component $e_{cp}(t)$ with the amplitude of an error component e(t) inhibited.

Moreover, in the present embodiment, the amplitude controlling circuit 24c finds a logarithmic value of an error component $D_{ce}(t)$ which has exceeded a predetermined value, and then adjusts the attenuation factor or amplification factor of the amplitude restricting circuit 24d in accordance with a value proportional to the logarithmic value, thereby outputting a corrected error component $e_{cp}(t)$ with the amplitude of an error component e(t) inhibited.

The tap coefficient updating unit 25 receives, in synchronism with the delay time T, a corrected error component $e_{cp}$ (t) outputted from the amplitude restricting circuit 24d, variably and adaptively controls the tap coefficients $K_0(t-1)$ - $K_m(t-1)$ of the respective multipliers $MP_0$ - $MP_m$ in accordance with a tap coefficient updating algorithm expressed by the following equation (1), thereby converging the corrected error component $e_{cp}$ (t) or an error component e(t) outputted by the subtracter 23c to almost zero.

In fact, the following equation (1) expresses items of reflection wave components causing multipass distortion, which can be obtained by carrying out the Taylor development of the reverse characteristics of a propagation path until an electric wave arrives at a reception antenna ANT.

$$K_j(t)=K_j(t-1)-\alpha \cdot e_{cp}(t) \cdot \{X_j(t) \cdot Y(t)+X_j(t-1) \cdot Y(t-1)\} \ \ \dots \ (1)$$

(here, j = 0, 1, 2, 3, ..., m-1; $\alpha> 0$; t is a natural number representing a timing of each delay time T)

The multipass removal filter 12 constituted in the above-described manner, upon receiving an intermediate frequency signal $X_{in}$ (t), will repeat the above-discussed processing in synchronism with the aforementioned delay time T.

The digital filter ADF, while continuously delaying an intermediate frequency signal $X_{in}$ (t) by a delay time T based on m levels of delay elements $D_0$ - $D_{m-1}$, multiplies the same by the tap coefficients $K_0$ (t-1) - $K_m(t-1)$ of the multipliers $MP_0$ - $MP_m$, followed by adding together m outputs of the multipliers $MP_0$-$MP_m$ using an adder ADD, thereby generating a desired signal Y (t) and supplying the same to the FM detector 14.

Further, while generating the reference signal $V_{th}(t)$ as an evaluation criterion in the above-mentioned envelope detecting section 22, the error detecting section 23 computes an error component e (t) between the reference signal $V_{th}$ (t) and an envelope signal $Y_e$ (t) of the desired signal Y (t) , and generates a corrected error component $e_{cp}(t)$ with the amplitude of an error component e(t) inhibited by the error component restricting section 24. Subsequently, the tap coefficient updating unit 25 variably and adaptively controls the respective tap coefficients $K_0(t)$ - $K_{m-1}$ (t) of the digital filter ADF in accordance with the tap coefficient updating algorithm expressed by the above equation (1) , thereby converging the corrected error component $e_{cp}(t)$ or an error component e(t) to almost zero.

By virtue of the multipass removal filter 12, when the amplitude of an error component e (t) is likely to exceed a predetermined value, tap coefficients $K_0(t)$ - $K_{m-1}(t)$ will be variably controlled in accordance with a corrected error component $e_{cp}(t)$ in which the amplitude of the error component e(t) has been inhibited, as shown in the above equation (1). In this way, the change of the tap coefficients $K_0(t)$ - $K_{m-1}(t)$ can be inhibited, making it possible to quickly converge the corrected error component $e_{cp}(t)$ or the error component $e(t)$ to almost zero. Therefore, it is possible to stabilize the digital filter ADF, thus realizing a multipass removal filter capable of performing a stabilized converging operation with respect to multipass.

In more detail, once the tap coefficient updating unit 25 performs a variable control on the tap coefficients $K_0(t)$ - $K_{m-1}(t)$ in accordance with the algorithm expressed by the above equation (1), a time necessary for the converging will be decided depending on a predetermined coefficient value $\alpha$.

Here, since an error component $e(t)$ outputted from the subtracter 23c is inputted to the digital low-pass filter 24b through the absolute value detector 24a, an error component $D_{ce}(t)$ will be gradually decided in accordance with the time constant characteristic of the digital low-pass filter 24b. Namely, during a period until a decided error component $D_{ce}(t)$ is supplied to the amplitude restricting circuit 24c, in other words, during a period when the error component $D_{ce}(t)$ has not yet been decided, since the amplitude of the error component $e(t)$ is still small, a corrected error component $e_{cp}(t)$ will become almost equal to the error component $e(t)$. Then, based on the corrected error component $e_{cp}(t)$, once the tap coefficient updating unit 25 performs a variable control on the tap coefficients $K_0(t)$ - $K_{m-1}(t)$ in accordance with the algorithm expressed by the above equation (1), it is possible to converge the corrected error component $e_{cp}(t)$ or the error component $e(t)$ at a velocity depending on the predetermined coefficient value $\alpha$, thereby making it possible to stabilize the digital filter ADF.

On the other hand, when there is a possibility that a digital filter ADF becomes unstable due to an influence from multipass, after the passing of a time period decided by the time constant of the digital low-pass filter 14b, an error component $D_{ce}(t)$ exceeding a predetermined amplitude will be decided and then supplied to the amplitude controlling circuit 24c. Therefore, the amplitude controlling circuit 24c controls the amplitude restricting circuit 24d so as to inhibit the amplitude of the error component $e(t)$, thereby outputting the amplitude-inhibited signal as a corrected error component $e_{cp}(t)$.

Once, based on the corrected error component $e_{ep}(t)$ having an inhibited amplitude, the tap coefficient updating unit 25 will perform a variable control on the tap coefficients $K_0(t)$ - $K_{m-1}(t)$ in accordance with the algorithm expressed by the above equation (1), a multiplication value of the corrected error component $e_{cp}(t)$ with the coefficient $\alpha$ will become small, hence substantially reducing the value of the coefficient $\alpha$. As a result, it is possible to shorten a time period necessary for converging the corrected error component $e_{cp}(t)$ or the error component $e(t)$ to almost zero, thus stabilizing the digital filter ADF.

In this way, the multipass removal filter 12 is constituted such that it can stably perform the converging operation with respect to multipass.

Referring again to Fig. 1, the FM detector 14 generates and outputs a composite signal by FM detecting the desired signal Y(t) outputted from the digital filter ADF.

The mute processor 15 is formed by a variable digital attenuator capable of adjusting the amplitude of the composite signal.

The high frequency removal filter 16 is formed by a variable digital filter capable of changing a high frequency gain so as to remove high frequency component of the composite signal outputted from the mute processor 15.

The stereo demodulator 17 includes a matrix circuit which can variably regulate a separation degree and also includes a deemphasis circuit. By matrix processing the composite signal from the mute processor 15 in response to the separation degree, the stereo demodulator 17 generates and outputs the right-and-left channel signals DL and DR.

The first field strength detector 18 performs an AM detection of an intermediate frequency signal DIF outputted from the A/D converter 10, or at first performs the AM detection and then computes an effective value, so as to detect a field strength of a reception antenna, and to supply the first field strength detection signal Es1 to the controller 21.

The second field strength detector 19 performs an AM detection of a desired signal Y(t) outputted from the multipass removal filter 12, or at first performs the AM detection and then computes an effective value, so as to detect a noise component-related field strength of a reception antenna, and to supply the second field strength detection signal Es2 to the noise amount detector 20.

The noise amount detector 20 detects a noise component from the second field strength signal Es2 and supplies the noise detection signal Ns to the controller 21.

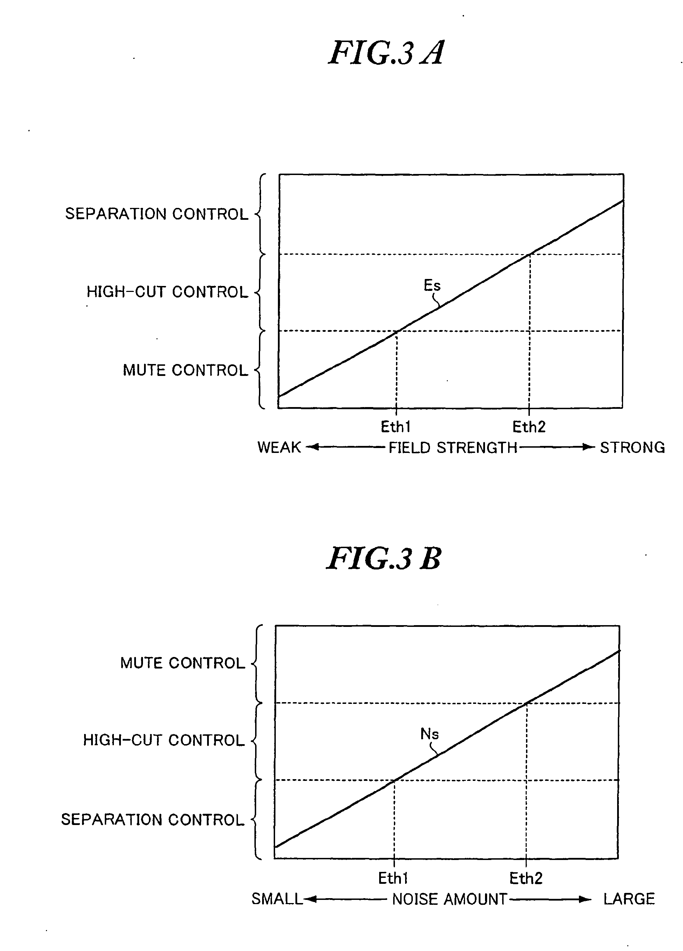

The controller 21 receives the first field strength detection signal Es1 and the noise detection signal Ns, performs processing (to be described later) with reference to Fig. 3A and Fig. 3B so as to variably controls the respective characteristics of the mute processor 15, the high frequency removal filter 16, and the stereo demodulator 17, thereby outputting right-and-left channel signals DL and DR having an acceptable S/N through the stereo demodulator 17.

That is, the controller 21 supervises in detail the changes of the first field strength detection signal Es1 and the noise detection signal Ns, and variably controls the respective characteristics of the mute processor 15, the high frequency removal filter 16, and the stereo demodulator 17 according to control signals CNT1, CNT2, and CNT3, in response to the changes of the signals Es1 and Ns.

Then, as shown in Fig. 3A, the first field strength detection signal Es1 is compared with a first threshold value Eth1 and a second threshold value Eth2 which are determined in advance, related to field strength and have different values. If the value of the first field strength detection signal Es1 is smaller than the first threshold value Eth1, an attenuation amount of the mute processor 15 is variably controlled (mute controlled) in response to the value of the first field strength detection signal Es1, thereby improving S/N.

Namely, when the value of the first field strength detection signal Es1 is smaller than the first threshold value Eth1, an attenuation amount of the mute processor 15 is increased every time the value of the first field strength detection signal Es1 is decreased, thereby improving S/N.

In addition, if an environment capable of obtaining right-and-left channel signals DL and DR having an acceptable S/N can be experimentally ensured, and if an attenuation amount of the mute processor 15 at this time, an f characteristic of the high frequency removal filter 16, and the separation degree of the stereo demodulator 17 are decided as standard characteristics which are then stored in advance in the controller 21, it is possible to perform a control in response to the value of the first field strength detection signal Es1, with the standard characteristics being used as criterions.

Next, when the value of the first field strength detection signal Es1 is between the first threshold value Eth1 and the second threshold value Eth2, the controller 21 operates to variably control (high-cut control) an f characteristic (high frequency gain) of the high frequency removal filter 16, thus improving S/N.

That is, if the value of the first field strength detection signal Es1 is between the first threshold value Eth1 and the second threshold value Eth2, and whenever the first field strength detection signal Es1 decreases, an f characteristic of the high frequency removal filter 16 will be controlled to attenuate its high frequency gain, thereby improving S/N.

Next, if the value of the first field strength detection signal Es1 becomes larger than the second threshold value Eth2, the control section 21 will perform a separation control for changing the separation degree of the stereo demodulator 17, thus improving S/N.

That is, if the value of the first field strength detection signal Es1 becomes larger than the second threshold value Eth2, whenever the value of the first field strength detection signal Es1 increases, the separation control is performed to increase the separation degree of the stereo demodulator 17.

Furthermore, as shown in Fig. 3B, the controller 21 operates to compare a noise detection signal Ns with a third threshold value Nth1 and a fourth threshold value Nth2 determined in advance in relation to noise component, and variably control the respective characteristics of the mute processor 15, the high frequency removal filter 16 and the stereo demodulator 17, thereby outputting right-and-left channel signals DL and DR having an acceptable S/N through the stereo demodulator 17.

At first, when the value of the noise detection signal Ns is smaller than the third threshold value Nth1, the controller 21 will perform a separation control for changing the separation degree of the stereo demodulator 17, thus improving S/N.

That is, if the value of the noise detection signal Ns is smaller than the third threshold value Nth1, whenever the value of the noise detection signal Ns increases, separation control is performed to reduce the separation degree of the stereo demodulator 17.

Next, when the value of the noise detection signal Ns is between the third threshold value Nth1 and the fourth threshold value Nth2, the controller 21 will operate to variably control an f characteristic (a high frequency gain) of the high frequency removal filter 16, thereby improving S/N.

That is, if the value of the noise detection signal Ns is between the third threshold value Nth1 and the fourth threshold value Nth2, whenever the value of the noise detection signal Ns increases, an f characteristic of the high frequency removal filter 16 will be controlled to attenuate its high frequency gain, thereby improving S/N.

Next, if the value of the noise detection signal Ns becomes larger than the fourth threshold value Nth2, the controller 21 will operate to variably control the attenuation amount of the mute processor 15 in response to the value of the noise detection signal Ns, thereby improving S/N.

That is, if the value of the noise detection signal Ns is larger than the fourth threshold value Nth2, whenever the value of the noise detection signal Ns increases, the attenuation amount of the mute processor 15 will also be increased so as to improve S/N.

Subsequently, the controller 21, by virtue of combination capable of effecting both conditions shown in Fig. 3A and Fig. 3B, operates to variably control the respective characteristics of the mute processor 15, the high frequency removal filter 16 and the stereo demodulator 17, thereby generating right-and-left channel signals DL and DR having an acceptable S/N.

As described above, according to the receiver of the present embodiment, the first field strength detector 18 operates to detect a field strength from an intermediate frequency signal DIF which has been outputted from the A/D converter 10 but has not been inputted into the multipass removal section 13, thereby properly detecting the field strength of the reception antenna. Further, since the respective characteristics of the mute processor 15, the high frequency removal filter 16 and the stereo demodulator 17 can be controlled in accordance with the detected first field strength signal Es1, it is possible to generate right-and-left channel signals DL and DR having an acceptable S/N.

Besides, the second field strength detector 19 operates on the multipass removal filter 13 to detect a second field strength signal Es2 froma desired signal Y (t) processed for removingmultipass distortion, while the noise amount detector 20 operates to detect a noise signal from the second field strength detection signal Es2, thereby making it possible to detect the noise signal Ns representing an amount of noise component remaining in the desired signal Y (t) . Then, since the respective characteristics of the mute processor 15, the high frequency removal filter 16 and the stereo demodulator 17 can be controlled in accordance with the noise detection signal Ns, it is possible to generate right-and-left channel signals DL and DR having an acceptable S/N.

Namely, in response to the changes of both the first field strength detection signal Es1 indicating an actual field strength and the noise detection signal Ns found from the desired signal Y(t) processed for removing multipass distortion but still containing noise component, the controller 21 operates to control the respective characteristics of the mute processor 15, the high frequency removal filter 16 and the stereo demodulator 17 in accordance with the two conditions shown in Figs. 3A and 3B. As a result, it is possible to remove the multipass distortion by virtue of the multipass removal filter 12, and generate right-and-left channel signals DL and DR having an acceptable S/N.

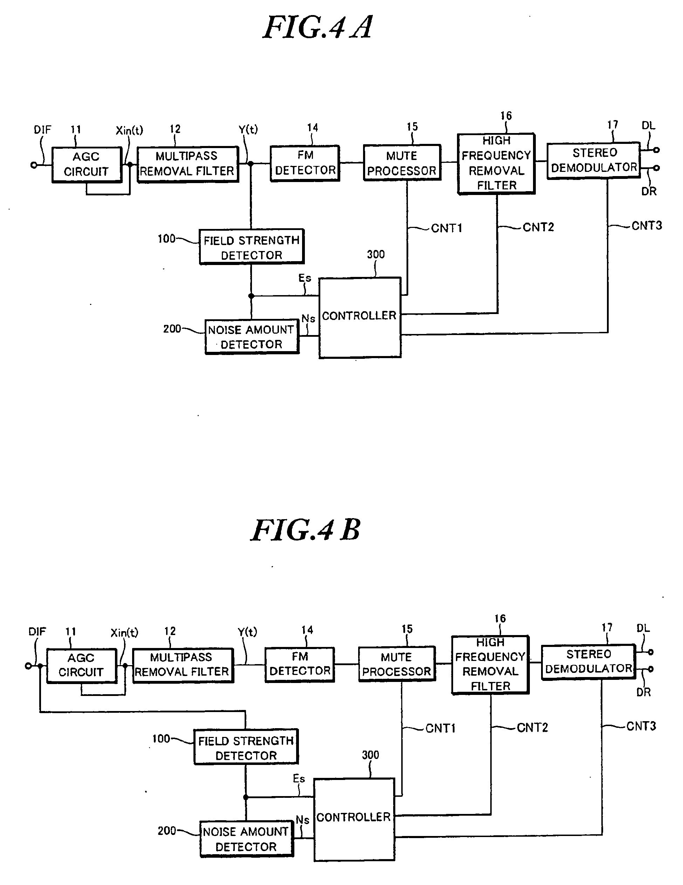

Moreover, when developing the receiver of the present embodiment, the inventors of the present invention have considered two circuits shown in Figs. 4A and 4B for generating a field strength detection signal and a noise detection signal necessary for controlling the respective characteristics of the mute processor 15, the high frequency removal filter 16 and the stereo demodulator 17. Therefore, the following description will be given to explain a comparison between the preferred embodiment shown in Fig. 1 and two other examples shown in Figs. 4A and 4B.

However, in Figs. 4A and 4B, units which are the same as or correspond to those shown in Fig. 1 will be represented by the same reference numerals.

At first, the receiver shown in Fig. 4A (hereinafter, referred to as "receiver of example 1") comprises a field strength detector 100 for AM detecting a desired signal Y (t) outputted from the multipass removal filter 12 so as to output a field strength detection signal Es, a noise amount detector 200 for detecting an amount of a noise component contained in the field strength detection signal Es so as to output a noise detection signal Ns, and a controller 300 provided for, in response to the changes of the field strength detection signal Es and the noise detection signal Ns, controlling the respective characteristics of the mute processor 15, the high frequency removal filter 16 and the stereo demodulator 17 in accordance with the two conditions shown in Figs. 3A and 3B.

According to the receiver of example 1, since the field strength detector 100 is provided not for detecting a field 'strength from an intermediate frequency signal DIF inputted into the AGC circuit 11, but for predicting and detecting a field strength from a desired signal processed by the AGC circuit 11 and the multipass removal filter 12, it is difficult to detect an actual field strength of the reception antenna. Accordingly, it is understood that the receiver shown in Fig. 1 as the preferred embodiment can more effectively improve S/N than the receiver of example 1 shown in Fig. 4A.

Next, the receiver shown in Fig. 4B (hereinafter, referred to as "receiver of example 2") comprises a field strength detector 100 for outputting a field strength detection signal Es by AM detecting an intermediate frequency signal DIF which has not been processed for removing multipass distortion, a noise amount detector 200 for detecting an amount of a noise component contained in the field strength detection signal Es so as to output a noise detection signal Ns, and a controller 300 provided for, in response to the changes of the field strength detection signal Es and the noise detection signal Ns, controlling the respective characteristics of the mute processor 15, the high frequency removal filter 16 and the stereo demodulator 17 in accordance with the two conditions shown in Figs. 3A and 3B.

According to the receiver of example 2, since the field strength detector 100 is provided to detect a field strength from an intermediate frequency signal DIF, it is possible to detect a field strength detection signal Es indicating an actual field strength of a reception antenna. However, the noise amount detector 200 fails to detect a noise detection signal indicating an amount of noise component remaining in the desired signal Y(t) processed by the AGC circuit 11 and the multipass removal filter 12. In other words, the noise detection signal Ns shown in Fig. 4B will not become a signal capable of indicating an amount of noise component remaining in the desired signal Y(t).

Accordingly, even if, for the purpose of improving an S/N with respect to a composite signal outputted from the FM detector 14 by FM detecting the desired signal Y(t), the respective characteristics of the mute processor 15, the high frequency removal filter 16 and the stereo demodulator 17 are controlled in accordance with the above-mentioned field strength detection signal Es and the above-mentioned noise detection signal Ns outputted respectively from the field strength detector 100 and the noises amount detector 200, it is still difficult to perform processing for sufficiently improving an S/N when processing such composite signal. Therefore, it is understood that the receiver shown in Fig. 1 as the preferred embodiment can more effectively improve S/N than the receiver of example 2 shown in Fig. 4B.

In addition, although the receiver shown in Fig. 1 represents a preferred embodiment of the present invention, the multipass removal filter 12 shown in Fig. 2 is allowed to have some other constitutions.

For example, although the multipass removal filter 12 shown in Fig. 2 is provided with the error component restricting section 24 which is for ensuring an excellent safety and includes the absolute value detecting circuit 24a, the digital low-pass filter 24b, and the amplitude controlling circuit 24c, it is also possible to omit such an error component restricting section 24 by supplying an error component e(t) outputted from the subtracter 23c to the tap coefficient updating unit 25, instead of supplying a corrected error component $e_{cp}(t)$ to this updating unit.

According to such a constitution, the corrected error component $e_{cp}(t)$ shown in the above equation (1) will be replaced by the error component e (t) . Such replacement howeverwill not cause anyproblems in practical use when performing usual reception in urban areas.

Moreover, it is also possible to change the tap coefficient updating algorithm to multiply, by a variable ν, the tap coefficient $K_j$ (t-1) shown in the first item on the right hand side of the above equation (1), and to allow the tap coefficient updating unit 25 to variably control the variable ν in response to the change of the aforementioned corrected error component $e_{cp}(t)$ or the error component e(t).

According to such a constitution, even if there is a possibility that the operation of the digital filter ADF will become unstable because of an influence from multipass, it is still possible to quicken the velocity for converging a corrected error component $e_{cp}(t)$ or an error component e(t) to almost zero, in response to the value of the variable ν. Therefore, it is possible to realize a multipass removal filter stable with respect to the multipass.


**Claims**

1. A receiver comprising:

   a multipath removal filter (12) for receiving as an input signal a digitalized FM-modulated or phase-modulated signal having an intermediate frequency, and removing a multipath distortion from the input signal;
   a detector (14) for detecting a desired signal output from the multipath removal filter;
   a demodulator (17) for demodulating a detection signal detected by the detector;
   a first field strength detector (18) for detecting a first field strength from said input signal;
   a second field strength detector (19) for detecting a second field strength from said desired signal;
   a noise amount detector (20) for detecting a noise component contained in the second field strength detection signal; and
   a controller (21) for performing at least a mute control, a high-cut control and a separation control on the demodulator, in response to a change in the first field strength detected by the first field strength detector and a change in the noise component detected by the noise amount detector (20).

2. The receiver according to claim 1, wherein the controller (21) operates to compare the first field strength with a first threshold value and a second threshold value which are predetermined in relation to field strength, to perform the mute control on the demodulator (17) when the first field strength is smaller than the first threshold value, to perform the high-cut control on the demodulator (17) when the first field strength is between the first threshold value and the second threshold value, and to perform the separation control on the demodulator (17) when the first field strength exceeds the second threshold value.

3. The receiver according to claim 1 or 2, wherein the controller (21) operates to compare the detected noise component with a third threshold value and a fourth threshold value which are predetermined in relation to noise component amount, to perform the separation control on the demodulator (17) when the detected noise component is smaller than the third threshold value, to perform the high-cut control on the demodulator (17) when the detected noise component is between the third threshold value and the fourth threshold value, and to perform the mute control on the demodulator (17) when the detected noise component exceeds the fourth threshold value.


**Patentansprüche**

1. Empfänger, der folgendes aufweist:

   - ein Mehrweg-Eliminierungsfilter (12), um ein digitalisiertes frequenzmoduliertes oder phasenmoduliertes Signal mit einer Zwischenfrequenz als Eingangssignal zu empfangen und um eine Mehrweg-Verzerrung aus dem Eingangssignal zu entfernen;
   - einen Detektor (14) zum Detektieren eines gewünschten Signals, das von dem Mehrweg-Eliminierungsfilter (12) abgegeben wird;
   - einen Demodulator (17) zum Demodulieren eines von dem Detektor detektierten Detektionssignals;
   - einen ersten Feldstärken-Detektor (18) zum Detektieren einer ersten Feldstärke von dem Eingangssignal;
   - einen zweiten Feldstärken-Detektor (19) zum Detektieren einer zweiten Feldstärke von dem gewünschten Signal;
   - einen Rauschbetrag-Detektor (20) zum Detektieren einer Rauschkomponente, die in dem zweiten Feldstärken-Detektionssignal enthalten ist; und

- eine Steuerung (21) um zumindest eine Stumm-Steuerung, eine Höhenabsenk-Steuerung und eine Trenn-Steuerung an dem Demodulator durchzuführen, und zwar in Abhängigkeit von einer Änderung der von dem ersten Feldstärken-Detektor detektierten ersten Feldstärke und einer Änderung der von dem Rauschbetrag-Detektor (20) detektierten Rauschkomponente.

**2.** Empfänger nach Anspruch 1,
wobei die Steuerung (21) derart arbeitet, daß sie die erste Feldstärke mit einem ersten Schwellenwert und einem zweiten Schwellenwert vergleicht, die in Relation zu der Feldstärke vorbestimmt sind, um die Stumm-Steuerung an dem Demodulator (17) vorzunehmen, wenn die erste Feldstärke niedriger ist als der erste Schwellenwert, um die Höhenabsenk-Steuerung an dem Demodulator (17) vorzunehmen, wenn die erste Feldstärke zwischen dem ersten Schwellenwert und dem zweiten Schwellenwert liegt, und um die Trenn-Steuerung an dem Demodulator (17) vorzunehmen, wenn die erste Feldstärke den zweiten Schwellenwert überschreitet.

**3.** Empfänger nach Anspruch 1 oder 2,
wobei die Steuerung (21) derart arbeitet, daß sie die detektierte Rauschkomponente mit einem dritten Schwellenwert und einem vierten Schwellenwert vergleicht, die in Relation zu dem Rauschkomponentenbetrag vorbestimmt sind, um die Trenn-Steuerung an dem Demodulator (17) vorzunehmen, wenn die detektierte Rauschkomponente niedriger ist als der dritte Schwellenwert, um die Höhenabsenk-Steuerung an dem Demodulator (17) vorzunehmen, wenn die detektierte Rauschkomponente zwischen dem dritten Schwellenwert und dem vierten Schwellenwert liegt, und um die Stumm-Steuerung an dem Demodulator (17) vorzunehmen, wenn die detektierte Rauschkomponente den vierten Schwellenwert überschreitet.

**Revendications**

**1.** Récepteur comprenant :

- un filtre anti-multichemin (12) destiné à recevoir en tant que signal d'entrée un signal numérisé à modulation FM ou à modulation de phase ayant une fréquence intermédiaire, et pour supprimer une distorsion multichemin du signal d'entrée ;
- un détecteur (14) destiné à détecter une sortie de signal souhaitée du filtre anti-multichemin ;
- un démodulateur (17) destiné à démoduler un signal de détection détecté par le détecteur ;
- un premier détecteur de force de champ (18) destiné à détecter une première force de champ dudit signal d'entrée ;
- un second détecteur de force de champ (19) destiné à détecter une seconde force de champ dudit signal souhaité ;
- un détecteur de quantité de bruit (20) destiné à détecter une composante de bruit contenue dans le second signal de détection de force de champ ; et
- un contrôleur (21) destiné à effectuer au moins un contrôle de silencieux, un contrôle de coupure haute et un contrôle de séparation sur le démodulateur, en réponse à un changement de la première force de champ détectée par le premier détecteur de force de champ et à un changement de la composante de bruit détectée par le détecteur de quantité de bruit (20).

**2.** Récepteur selon la revendication 1,
dans lequel le contrôleur (21) fonctionne pour comparer la première force de champ à une première valeur de seuil et à une seconde valeur de seuil qui sont prédéterminées par rapport à la force de champ, pour effectuer le contrôle de silencieux sur le démodulateur (17) lorsque la première force de champ est inférieure à la première valeur de seuil, pour effectuer le contrôle de coupure haute sur le démodulateur (17) lorsque la première force de champ est entre la première valeur de seuil et la seconde valeur de seuil, et pour effectuer le contrôle de séparation sur le démodulateur (17) lorsque la première force de champ dépasse la seconde valeur de seuil.

**3.** Récepteur selon la revendication 1 ou 2,
dans lequel le contrôleur (21) fonctionne pour comparer la composante de bruit détectée à une troisième valeur de seuil et à une quatrième valeur de seuil qui sont prédéterminées par rapport à la quantité de composante de bruit, pour effectuer le contrôle de séparation sur le démodulateur (17) lorsque la composante de bruit détectée est inférieure à la troisième valeur de seuil, pour effectuer le contrôle de coupure haute sur le démodulateur (17) lorsque la composante de bruit détectée est entre la troisième valeur de seuil et la quatrième valeur de seuil, et pour effectuer le contrôle de silencieux sur le démodulateur (17) lorsque la composante de bruit détectée dépasse la quatrième valeur de seuil.

FIG.1

EP 1 538 759 B1

# FIG.2

13

# FIG.3 A

SEPARATION CONTROL

HIGH-CUT CONTROL

Es

MUTE CONTROL

Eth1    Eth2

WEAK ◄────── FIELD STRENGTH ──────► STRONG

# FIG.3 B

MUTE CONTROL

HIGH-CUT CONTROL

Ns

SEPARATION CONTROL

Eth1    Eth2

SMALL ◄────── NOISE AMOUNT ──────► LARGE

14

## FIG.4 A

DIF — 11 — Xin(t) — 12 — Y(t) — 14 — 15 — 16 — 17 — DL

AGC CIRCUIT | MULTIPASS REMOVAL FILTER | FM DETECTOR | MUTE PROCESSOR | HIGH FREQUENCY REMOVAL FILTER | STEREO DEMODULATOR — DR

CNT1 · CNT2 · CNT3

100 — FIELD STRENGTH DETECTOR

300

Es

CONTROLLER

200 — NOISE AMOUNT DETECTOR — Ns

## FIG.4 B

DIF — 11 — Xin(t) — 12 — Y(t) — 14 — 15 — 16 — 17 — DL

AGC CIRCUIT | MULTIPASS REMOVAL FILTER | FM DETECTOR | MUTE PROCESSOR | HIGH FREQUENCY REMOVAL FILTER | STEREO DEMODULATOR — DR

CNT1 · CNT2 · CNT3

100 — FIELD STRENGTH DETECTOR

300

Es

CONTROLLER

200 — NOISE AMOUNT DETECTOR — Ns

## FIG.5

EP 1 538 759 B1